(19) Europäisches Patentamt
European Patent Office
Office européen des brevets

(11) **EP 2 712 098 B1**

(12) **EUROPEAN PATENT SPECIFICATION**

(45) Date of publication and mention
of the grant of the patent:
**02.09.2015 Bulletin 2015/36**

(51) Int Cl.:
*H04B 17/00* (2015.01)     *H04B 1/26* (2006.01)
*H04L 25/03* (2006.01)     *G01R 31/08* (2006.01)

(21) Application number: **11783020.8**

(22) Date of filing: **27.05.2011**

(86) International application number:
**PCT/CN2011/074756**

(87) International publication number:
**WO 2011/144103 (24.11.2011 Gazette 2011/47)**

(54) **Passive inter-modulation position detection method and device**

Verfahren und Vorrichtung für passive Intermodulationspositionserkennung

Procédé et dispositif de détection de position d'intermodulation passive

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**26.03.2014 Bulletin 2014/13**

(73) Proprietor: **Huawei Technologies Co., Ltd.
Longgang District
Shenzhen, Guangdong 518129 (CN)**

(72) Inventors:
• **WANG, Chun**
  **Guangdong 518129 (CN)**
• **YE, Siqing**
  **Guangdong 518129 (CN)**
• **YANG, Jianjun**
  **Guangdong 518129 (CN)**
• **XU, Jing**
  **Guangdong 518129 (CN)**

(74) Representative: **Thun, Clemens
Mitscherlich PartmbB
Patent- und Rechtsanwälte
Sonnenstraße 33
80331 München (DE)**

(56) References cited:
**CN-A- 1 870 473        CN-A- 101 572 903
CN-A- 101 641 872      KR-A- 20110 013 612
US-A1- 2010 085 061**

• **WEINSTEIN D: "Passive Intermodulation
Distortion in Connectors, Cable and Cable
Assemblies", INTERNET CITATION, February
2001 (2001-02), XP002330778, Retrieved from the
Internet: URL:http://www.amphenolrf.com/
simple/PIM%2 0Paper.pdf [retrieved on
2005-06-03]**

EP 2 712 098 B1

Description

TECHNICAL FIELD

The present invention relates to the field of wireless communications technologies, and in particular, to a passive inter-modulation position detection method and apparatus.

BACKGROUND

In a wireless communications system, a spurious signal is generated as two or more frequencies are mixed in a non-linear device, and the spurious signal is also called a passive inter-modulation (Passive Inter-Modulation, PIM) signal. When a passive inter-modulation signal falls within a receiving band of a base station receiver, the receiver receives the passive inter-modulation signal, and therefore the sensitivity of the receiver is reduced, leading to a decline in network quality of a wireless network and a system carrier-to-interference ratio, and also leading to a decrease in capacity of the communications system.

In a base station, passive inter-modulation is generally caused by a radio frequency connecting piece. How to determine a position of an antenna feeder that causes the passive inter-modulation in the base station is a problem to be solved for the base station. However, a passive inter-modulation position detection technology in the prior art has certain defects.

The document US 2010/085061 discloses locating sources of passive intermodulation. A Dual tone signal is applied to transmitter. One of the tones is modulated with a sawtooth waveform to give low deviation FM. The passive intermodulation signal is reflected back (and thus delayed). This signal is mixed with a locally generated (and thus not delayed) passive intermodulation signal to give a measurement signal deltaF, which can be converted into the time domain and used to calculate the distance to the source of passive intermodulation.

SUMMARY

The present invention provides a method and an apparatus for detecting a passive inter-modulation position, which are capable of detecting a position where a passive inter-modulation PIM signal is generated in a base station.

To solve the foregoing technical problem, in one aspect, the present invention provides a passive inter-modulation position detection method, including:

A1: inputting a dual-tone signal to a transmit channel of a base station;
A2: obtaining a passive inter-modulation PIM multi-tone signal output by an analog-to-digital converter on a receive channel of the base station;
A3: obtaining PIM distribution of the base station according to the PIM multi-tone signal;
cyclically performing the steps A1, A2, and A3 for K times, where two successive dual-tone signals are input at an interval that is an integer multiple of a preset time $T_{symbol}$, a frequency of the dual-tone signal input each time is increased or decreased progressively based on a preset step frequency $f_{symbol}$, K is an integer greater than 1, $f_{symbol}=1/T_{ymbol}$, and a dual-tone interval frequency of the dual-tone signal is an integer multiple of $f_{symbol}$; and
performing PIM interpretation according to PIM distribution obtained in K times, to obtain a PIM position detection result.

In another aspect, the present invention further provides a passive inter-modulation position detection apparatus, including:

a dual-tone signal inputting unit, configured to input a dual-tone signal to a transmit channel of a base station;
a PIM multi-tone signal obtaining unit, configured to obtain a passive inter-modulation PIM multi-tone signal output by an analog-to-digital converter on a receive channel of the base station;
a PIM distribution detection unit, configured to obtain PIM distribution of the base station according to the PIM multi-tone signal;
a cycle control unit, configured to trigger the dual-tone signal inputting unit to input a dual-tone signal to the transmit channel of the base station after the PIM distribution detection unit obtains the PIM distribution of the base station, where two successive dual-tone signals are input at an interval that is an integer multiple of a preset time $T_{symbol}$, a frequency of the dual-tone signal input each time is increased or decreased progressively based on a preset step frequency, the cycle control unit controls the dual-tone signal inputting unit to input dual-tone signals for K times in total, and K is an integer greater than 1; and
a PIM determination unit, configured to perform PIM interpretation according to the obtained PIM distribution, to obtain a PIM position detection result.

In the passive inter-modulation position detection method provided in the embodiments of the present invention, dual-tone signals are inputted to a transmit channel of a base station for K times at a preset time interval, and a PIM multi-tone signal is generated from a dual-tone signal in the base station, where a frequency of the PIM multi-tone signal falls within a receiving band of the base station. In the embodiments of the present invention, PIM distribution is obtained according to the PIM multi-tone signal on the receive channel of the base station, PIM interpretation is performed according to the PIM distribution to obtain a PIM position detection result, and then PIM in the base station is eliminated according to the PIM position detection result.

## BRIEF DESCRIPTION OF DRAWINGS

To describe the technical solutions in the embodiments of the present invention more clearly, the following briefly introduces the accompanying drawings required for describing the embodiments or the prior art. Apparently, the accompanying drawings in the following description show merely some embodiments of the present invention, and a person of ordinary skill in the art may still derive other drawings from these accompanying drawings without creative efforts.

FIG. 1 is a schematic flow chart of a passive inter-modulation position detection method provided in Embodiment 1 of the present invention;

FIG. 2 is a schematic flow chart of a specific embodiment of a method for obtaining PIM distribution of a base station according to a PIM multi-tone signal in the method provided in Embodiment 1 of the present invention;

FIG. 3 is a schematic flow chart of a method for performing digital down-conversion processing on a received PIM multi-tone signal in a passive inter-modulation position detection method provided in an embodiment of the present invention;

FIG. 4 is an application scenario diagram of a passive inter-modulation position detection method provided in Embodiment 2 of the present invention;

FIG. 5 is a schematic flow chart of the passive inter-modulation position detection method provided in Embodiment 2 of the present invention;

FIG. 6 is a schematic diagram of a frequency scanning process corresponding to a technical option 1 in the passive inter-modulation position detection method provided in Embodiment 2 of the present invention;

FIG. 7 is a schematic diagram of a frequency scanning process corresponding to a technical option 2 in the passive inter-modulation position detection method provided in Embodiment 2 of the present invention;

FIG. 8 is a schematic diagram of a frequency scanning process corresponding to a technical option 3 in the passive inter-modulation position detection method provided in Embodiment 2 of the present invention;

FIG. 9 is a schematic diagram of a frequency scanning process corresponding to a technical option 4 in the passive inter-modulation position detection method provided in Embodiment 2 of the present invention;

FIG. 10 is a schematic structural diagram of a passive inter-modulation position detection apparatus provided in Embodiment 3 of the present invention; and

FIG. 11 is a schematic structural diagram of a PIM distribution detection unit in the passive inter-modulation position detection apparatus provided in Embodiment 3 of the present invention.

## DESCRIPTION OF EMBODIMENTS

The following clearly and completely describes the technical solutions in the embodiments of the present invention with reference to the accompanying drawings in the embodiments of the present invention. Apparently, the described embodiments are merely a part rather than all of the embodiments of the present invention. All other embodiments obtained by a person of ordinary skill in the art based on the embodiments of the present invention without creative efforts shall fall within the protection scope of the present invention.

The present invention provides a passive inter-modulation position detection method and apparatus. For better comprehension of the technical solution of the present invention, the following describes in detail the embodiments of the present invention with reference to the accompanying drawings.

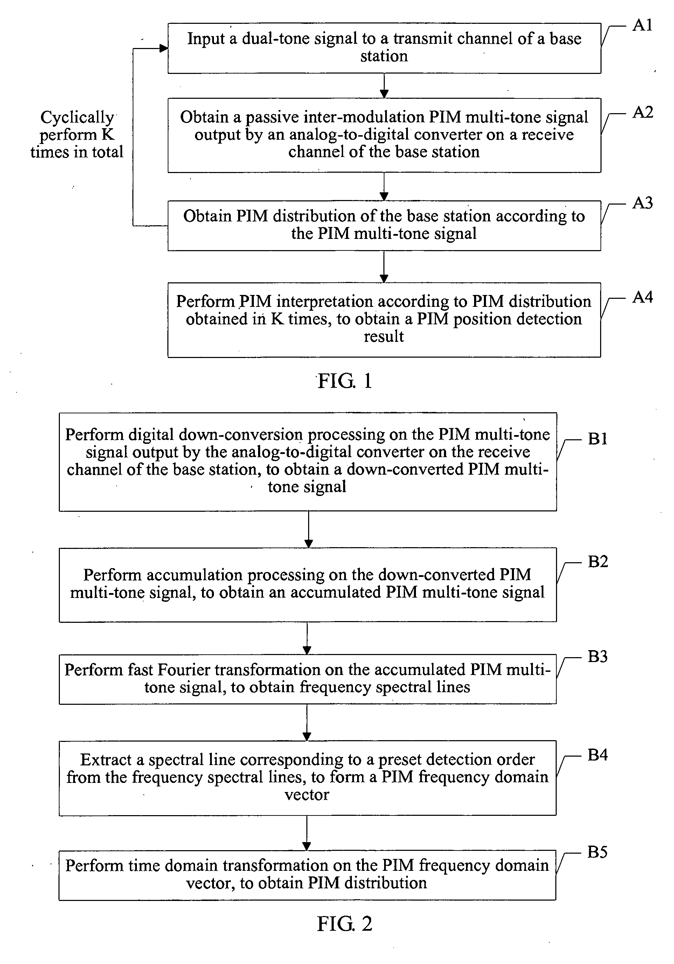

Referring to FIG. 1, FIG. 1 is a flow chart of a passive inter-modulation position detection method provided in Embodiment 1 of the present invention.

The passive inter-modulation position detection method provided in Embodiment 1 of the present invention may include:

A1: Input a dual-tone signal to a transmit channel of a base station.

In the embodiment of the present invention, a PIM detection apparatus may input a test signal to a digital transmit channel of the base station. Specifically, the test signal in the embodiment of the present invention is specifically a dual-tone signal, where the dual-tone signal is a digital complex signal, that is, in the form of a digital (In-phase and Quadrature, IQ) in-phase and quadrature signal.

After the dual-tone signal is input to the digital transmit channel, the dual-tone signal is subject to digital-to-analog conversion, and then enters an analog transmit channel. Frequencies of the dual-tone signal become radio frequencies, and a radio frequency signal enters a feeder of the base station, thereby generating a PIM multi-tone signal. A frequency of the PIM multi-tone signal falls within a receiving band of the base station, and the PIM multi-tone signal becomes a PIM multi-tone signal on a receive channel of the base station. The PIM detection apparatus may be located in a carrier unit of the base station.

    A2: Obtain a passive inter-modulation PIM multi-tone signal output by an analog-to-digital converter on the receive channel of the base station.

Specifically, the PIM detection apparatus may obtain a PIM multi-tone signal output by the analog-to-digital converter on the receive channel of the base station. The receive channel includes a downlink receive channel and an uplink receive channel. The analog-to-digital converter on the receive channel receives the passive inter-modulation PIM multi-tone signal from an analog receive channel, and converts the received PIM multi-tone signal to a digital passive inter-modulation PIM multi-tone signal.

    A3: Obtain PIM distribution of the base station according to the PIM multi-tone signal.

Specifically, the PIM detection apparatus may obtain the PIM distribution of the base station according to the currently obtained PIM multi-tone signal. The PIM distribution specifically refers to PIM magnitudes at positions with different distances to a junction between a duplexer and a feeder, and there is a position with greatest PIM strength in the PIM distribution obtained each time.

In the embodiment of the present invention, the steps A1 to A3 are performed for K times in total. Two successive dual-tone signals are input at an interval that is an integer multiple of a preset time Tsymbol, a frequency of one tone or frequencies of both tones of the dual-tone signal input each time are increased or decreased progressively based on a preset step frequency, and K is an integer greater than 1. This preset step frequency is called a frequency scanning step frequency, or a frequency scanning step for short.

A manner in which the frequency of one tone remains unchanged while the frequency of the other tone is increased or decreased progressively based on the frequency scanning step so that a dual-tone interval is increased or decreased progressively based on the frequency scanning step is called a frequency scanning manner 1. A manner in which both tones change while the dual-tone interval remains unchanged, that is, the frequencies of the dual-tone signal are increased or decreased progressively based on the frequency scanning step, is called a frequency scanning manner 2.

After dual-tone signals are inputted for K times, the base station performs step A4 according to the obtained PIM distribution.

    A4: Perform PIM interpretation according to PIM distribution obtained in K times, to obtain a PIM position detection result.

Specifically, the PIM detection apparatus may perform PIM interpretation according to the obtained PIM distribution, so as to obtain a PIM position detection result, that is, to obtain a position with a maximum PIM value. The position detection result specifically may be specifically a distance from a position where PIM is generated to a junction between a duplexer and a feeder.

In the passive inter-modulation position detection method provided in the embodiment of the present invention, dual-tone signals are input to the transmit channel of the base station for K times at a preset time interval, a PIM multi-tone signal is generated from a dual-tone signal in the base station, and the frequency of the PIM multi-tone signal falls within a receiving band. Therefore, in the embodiment of the present invention, PIM distribution is obtained according to the PIM multi-tone signal on the receive channel of the base station, and PIM interpretation is performed according to the PIM distribution, to obtain a PIM position detection result, and then PIM in the base station can be eliminated according to the detection result.

Referring to FIG. 2, FIG. 2 is a schematic flow chart of a specific embodiment of a method for obtaining PIM distribution of a base station according to a PIM multi-tone signal in the method provided in Embodiment 1 of the present invention.

In the embodiment of the present invention, a step frequency between two successively input dual-tone signals is $f_{symbol}$, that is, a frequency scanning step is $f_{symbol}$, where $f_{symbol}=1/T_{ymbol}$. The frequency of one tone or frequencies of both tones of the dual-tone signal input each time are increased or decreased progressively based on the frequency scanning step.

Furthermore, the PIM detection apparatus obtaining PIM distribution of the base station according to the PIM multi-tone signal (step A3) may specifically include:

B1: Perform digital down-conversion processing on the PIM multi-tone signal output by the analog-to-digital converter on the receive channel of the base station, to obtain a down-converted PIM multi-tone signal.

Specifically, in the embodiment of the present invention, the PIM multi-tone signal obtained each time may be shifted near zero frequency, and then digital low-pass filtering is performed to filter out a digital image, thereby completing digital down-conversion processing to obtain a down-converted PIM multi-tone signal. In the digital down-conversion processing, a specific frequency which is spaced an integer multiple of $f_{symbol}$ from a radio frequency carrier of the PIM multi-tone signal is shifted to zero frequency, and the selection of the specific frequency should make the PIM multi-tone signal fall within a digital low-pass filter band.

B2: Perform accumulation processing on the down-converted PIM multi-tone signal, to obtain an accumulated PIM multi-tone signal.

In the embodiment of the present invention, the signal-to-noise ratio of the PIM multi-tone signal may be increased after the PIM detection apparatus performs accumulation processing on the down-converted PIM multi-tone signal. The accumulation processing process may be specifically implemented by an accumulator in the PIM detection apparatus. It should be pointed out that, for the PIM multi-tone signal obtained each time, a time difference between a start moment of the accumulation and a moment when a corresponding dual-tone signal is input to the transmit channel is an integer multiple of $T_{symbol}$, thereby ensuring that a phase change of the signal output after the accumulation only reflects information about a PIM position, where $T_{symbot}=1/f_{symbol}$. For example, $f_{symbol}=480$ kHz, and $T_{symbol}={_1}/f_{symbol}=2.083333$ $\mu$s.

B3: Perform fast Fourier transformation on the accumulated PIM multi-tone signal, to obtain frequency spectral lines.

In the embodiment of the present invention, fast Fourier transformation is performed on the accumulated PIM multi-tone signal, to obtain frequency spectral lines, where the number of points in the fast Fourier transformation is $N_{FFT}$. $T_{ymbol}$ is equal to $N_{FFT} \times T_{sample}$, $T_{sample}$ is a sampling point interval at which the base station receives digital baseband signals, and $T_{sample}=T_{symbol}/N_{FFT}$.

A group of frequency spectral lines may be obtained after the fast Fourier transformation is performed on the accumulated PIM multi-tone signal obtained each time.

B4: Extract a spectral line corresponding to a preset detection order from the frequency spectral lines, to form a PIM frequency domain vector.

Specifically, for example, if fifth-order PIM is detected, a spectral line corresponding to the fifth-order PIM is extracted from the frequency spectral lines, to form a PIM frequency domain vector. The preset detection order may be 3 or 5. During specific implementation of the technical solution of the embodiment of the present invention, the detection order may be determined according to the bandwidth of a radio frequency filter and transmitting-receiving duplex frequency separation.

B5: Perform time domain transformation on the PIM frequency domain vector, to obtain PIM distribution.

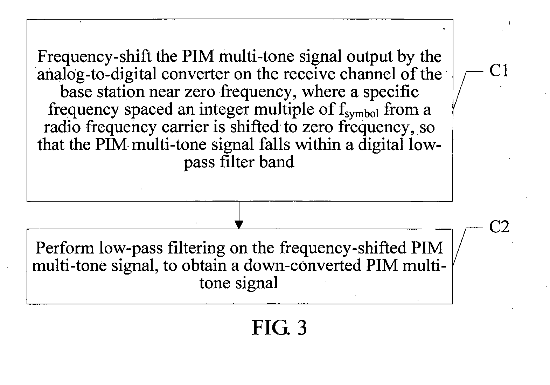

Specifically, in the embodiment of the present invention, time domain transformation is performed on the formed PIM frequency domain vector, to obtain PIM distribution.
In the embodiment of the present invention, accumulation processing is performed on the PIM multi-tone signal to improve the signal-to-noise ratio of the PIM multi-tone signal, so that the signal-to-noise ratio of the PIM multi-tone signal satisfies a test precision requirement.
Referring to FIG. 3, FIG. 3 is a schematic flow chart of a method for performing digital down-conversion processing on a received PIM multi-tone signal in a passive inter-modulation position detection method provided in an embodiment of the present invention.
In the embodiment of the present invention, the step of performing digital down-conversion processing on the received PIM multi-tone signal (step B1) may specifically include:

C1: Frequency-shift the PIM multi-tone signal output by the analog-to-digital converter on the receive channel of the base station near zero frequency, where a specific frequency spaced an integer multiple of $f_{symbol}$ from a radio frequency carrier is shifted to zero frequency, so that the PIM multi-tone signal falls within a digital low-pass filter band.

Specifically, in the embodiment of the present invention, the received PIM multi-tone signal is frequency-shifted near zero frequency during frequency shift, where a specific frequency spaced an integer multiple of $f_{symbol}$ from a radio frequency carrier is shifted to zero frequency, and the selection specific frequency should make PIM multi-tone signal fall within a digital low-pass filter band, so as to reserve the PIM multi-tone signal during low-pass filtering.

C2: Perform low-pass filtering on the frequency-shifted PIM multi-tone signal, to obtain a down-converted PIM multi-tone signal.

Specifically, in the embodiment of the present invention, low-pass filtering may be performed on the frequency-shifted PIM multi-tone signal, to filter out a digital image, thereby obtaining a down-converted PIM multi-tone signal.

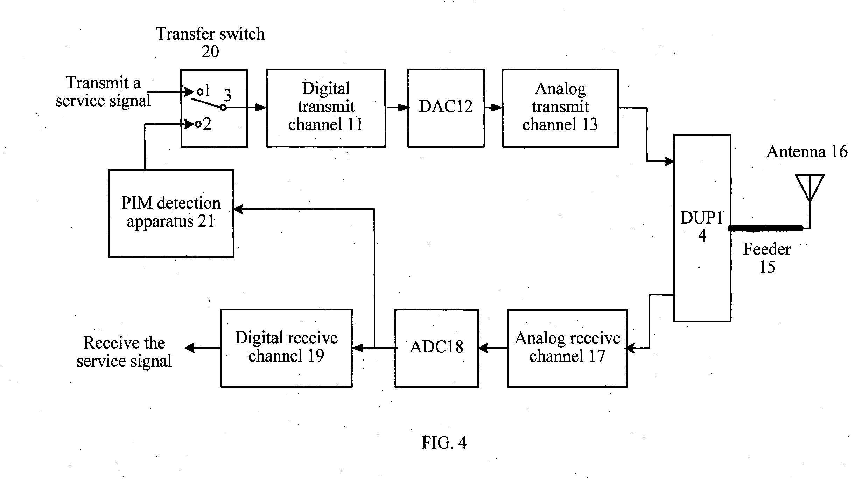

Referring to FIG. 4, FIG. 4 is an application scenario diagram of a passive inter-modulation position detection method provided in Embodiment 2 of the present invention.

In this application scenario, a base station includes a digital transmit channel 11, a digital-to-analog converter 12, an analog transmit channel 13, a duplexer (Duplexer, DUP) 14, a feeder 15, an antenna 16, an analog receive channel 17, an analog-to-digital converter 18, a digital receive channel 19, a transfer switch 20, a PIM detection apparatus 21, and so on. When a service signal is transmitted, the transfer switch 20 is switched to 1, the service signal is input to the digital transmit channel 11, and then digital-to-analog conversion is performed on the signal output by the digital transmit channel 11. An analog signal obtained after the digital-to-analog conversion is input to the analog transmit channel 13 and becomes a radio frequency signal; the radio frequency signal is transmitted through the duplexer 14, the feeder 15, and the antenna 16.

During passive inter-modulation position detection, the transfer switch 20 is first switched to position 2.

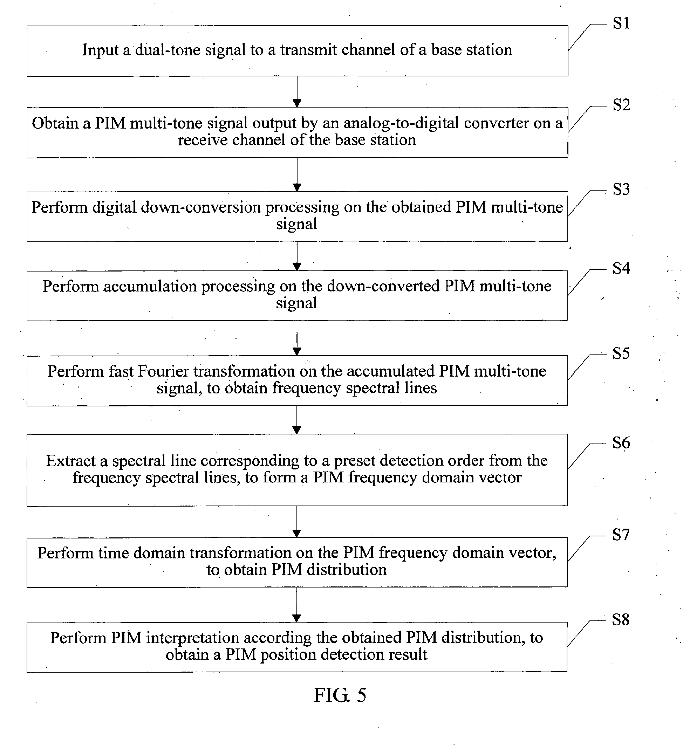

Referring to FIG. 5, FIG. 5 is a flow chart of the passive inter-modulation position detection method provided in Embodiment 2 of the present invention.

The passive inter-modulation position detection method provided in Embodiment 2 of the present invention mainly includes:

S1: Input a dual-tone signal to a transmit channel of a base station.

In the embodiment of the present invention, when a PIM detection apparatus performs passive inter-modulation position detection, dual-tone signals are input to the digital transmit channel 11 for K times, where frequencies of the first input dual-tone signal are f1_BB(k) and f2_BB(k).

In the embodiment of the present invention, after passing through the digital transmit channel 11, the digital-to-analog converter 12, and the analog transmit channel 13, a dual-tone signal becomes a dual-tone radio frequency signal suitable for being transmitted to a wireless space, and the frequencies thereof are radio frequencies f1(k) and f2(k) respectively, where f1(k)<f2(k). The digital transmit channel 11, the DAC 12, and the analog transmit channel 13 may be implemented in multiple manners.

After passing through the duplexer 14, the dual-tone radio frequency signal with the frequencies being f1(k) and f2(k) enters the feeder 15. The feeder 15 usually includes a down-jumper, a main feeder, and an up-jumper, and different parts are connected using radio frequency connectors. PIM occurs at these parts due to reasons such as oxidization and moisture. As for the dual-tone radio frequency signal with the frequencies being f1(k) and f2(k), frequencies [f1(k)-m(f2(k)-f1(k))] and [f2(k)+m(f2(k)-f1(k))] are generated, where m is an integer. If these frequencies fall within the receiving band of the base station, the signal with these frequencies can be received by a receiver and become a PIM multi-tone signal on the receive channel, where m=(M-1)/2, and M is a PIM order used in PIM detection. For third-order PIM, M=3, and m=1; and for fifth-order PIM, M=5, and m=2.

S2: Obtain a PIM multi-tone signal output by an analog-to-digital converter ADC on the receive channel of the base station.

Specifically, the PIM detection apparatus obtains a PIM multi-tone signal which has been processed by the analog receive channel 17 and the analog-to-digital converter 18.

S3: Perform digital down-conversion processing on the obtained PIM multi-tone signal.

In the embodiment of the present invention, the PIM detection apparatus shifts the PIM multi-tone signal near zero frequency, and performs digital low-pass filtering to filter out the a digital image, thereby completing digital down-conversion processing. Specifically, in the embodiment of the present invention, a radio frequency carrier of the received PIM multi-tone signal is shifted near zero frequency, or a specific frequency which is spaced an integer multiple of $f_{symbol}$ from the radio frequency carrier of the received PIM multi-tone signal is shifted to zero frequency, and the selection of the specific frequency should make the PIM multi-tone signal fall within a digital low-pass filter band.

S4: Perform accumulation processing on the down-converted PIM multi-tone signal.

Specifically, a signal-to-noise ratio (Signal to Noise Ratio, SNR) of the down-converted PIM multi-tone signal obtained in step S3 is relatively small. Therefore, in the embodiment of the present invention, the PIM detection apparatus performs accumulation processing on the down-converted PIM multi-tone signal, thereby increasing the signal-to-noise ratio of the PIM multi-tone signal.

The number of accumulation times may be determined according to precision of the test.

S5: Perform fast Fourier transformation on the accumulated PIM multi-tone signal, to obtain frequency spectral lines.

The frequency spectral lines obtained after the fast Fourier transformation are complex values, and the number of points in the fast Fourier transformation is $N_{FFT}$.

S6: Extract a spectral line corresponding to a preset detection order from the frequency spectral lines, to form a PIM frequency domain vector.

For example, if fifth-order PIM is detected, the PIM detection apparatus extracts a spectral line corresponding to the fifth-order PIM from the frequency spectral lines, to form a PIM frequency domain vector. The preset detection order may be 3 or 5. During specific implementation of the technical solution of the embodiment of the present invention, the order may be determined according to the bandwidth of a radio frequency filter and transmitting-receiving duplex frequency separation.

The number of elements in the PIM frequency domain vector is $N_{FFT}$, which is equal to the number of points in the fast Fourier transformation and corresponding to $N_{FFT}$ digital frequencies, each element in the PIM frequency domain vector is called a frequency, and an interval between adjacent frequencies, that is, a difference between digital frequencies corresponding to adjacent frequencies, is $f_{symbol}$. An initial value of the PIM frequency domain vector is 0, that is, before a first frequency is measured, all $N_{FFT}$ elements are 0. When the PIM frequency domain vector is formed, the digital frequency of the spectral line output after the FFT is not changed. The dual-tone test is only performed on K frequencies among the $N_{FFT}$ frequencies of the PIM frequency domain vector, so ($N_{FFT}$-K) frequencies are not tested, and values of digital frequencies corresponding to the ($N_{FFT}$-K) elements are always 0. Therefore, after one frequency scanning measurement (the dual-tone signals are input for K times), in the frequency domain vector, there are K frequencies with non-zero values, which are corresponding to K spectral lines of the fifth-order PIM, and values of other frequencies in the frequency domain vector are 0.

S7: Perform time domain transformation on the PIM frequency domain vector, to obtain PIM distribution.

Specifically, in the embodiment of the present invention, IFFT processing may be directly performed on the obtained PIM frequency domain vector, to obtain a time domain vector; and then left cyclic shift is performed on the time domain vector, where the number of shifted points is referred to as a zero-distance calibration value $D_{zero}$; therefore, the PIM distribution is obtained.

In the embodiment of the present invention, the PIM frequency domain vector may be first divided by a zero-distance PIM frequency domain vector in a point-to-point manner, and then inverse fast Fourier transformation is performed on a vector obtained through the division, to obtain PIM distribution. The following gives an example of point-to-point division: for example, a vector [1,2+0.6j,3,4-2.2j,5] is divided by a vector [3,4,5+1.6j,8-2j,7] in a point-to-point manner, and a vector [1/3,(2+0.6j)/4,3/(5+1.6j),(4-2.2j)/(8-2j),5/7] is obtained.

The zero-distance calibration value $D_{zero}$ and the zero-distance PIM frequency domain vector may be obtained in the following manner before the PIM position detection is performed.

First of all, the junction between the duplexer 14 and feeder 15 in the base station is defined as a zero-distance position, and then a PIM load is connected to the zero-distance position. The PIM load is a load capable of generating an evident single PIM point. Then, the foregoing steps S1 to S6 are performed, and the obtained frequency domain vector is the zero-distance PIM frequency domain vector.

Secondly, IFFT transformation is performed on the zero-distance PIM frequency domain vector to obtain PIM distribution. A position of a peak value point on a PIM distribution diagram is the zero-distance calibration value $D_{zero}$.

For example, if $N_{FFT}$ is 384, serial numbers of time domain sampling points in an IFFT output vector are 0 to $N_{FFT}-1$, and the peak value appears at 200, $D_{zero}=200$.

In the embodiment of the present invention, after the PIM distribution corresponding to the initially input dual-tone signal is obtained, a dual-tone signal is input again to the transmit channel of the base station. A period of transmitting dual-tone signals is $T_{symbol}$, a symbol rate $f_{symbol}$ of the dual-tone signal is $1/T_{symbol}$, where $T_{symbol}=N_{FFT} \times T_{sample}$, $T_{sample}$ is a sampling point interval at which the base station receives digital baseband signals, a data rate for receiving the digital baseband signals is $f_{sample}$, and $f_{sample}=1/T_{sample}$.

In the embodiment of the present invention, a sampling point interval for transmitting digital baseband signals and a sampling point interval for receiving digital baseband signals may be the same, that is, both sampling point intervals are $T_{sample}$. If the sampling point interval for transmitting digital baseband signals and the sampling point interval for receiving digital baseband signals are different, for example, the sampling point interval for transmitting digital baseband signals is $T_{sample}/2$, and the sampling point interval for receiving digital baseband digital signals is $T_{sample}$, assuming that a signal receiving period of the receive channel is $N_{FFT} \times T_{sample}$, in order to ensure the same period duration $N_{FFT} \times T_{sample}$, correspondingly, a signal transmitting period should be $N_{FFT} \times T_{sample}$ divided by $T_{sample}/2$, which is equal to $2N_{FFT}$ points.

In the embodiment of the present invention, frequencies of dual tones of the dual-tone signals may vary. A dual-tone signal input each time is corresponding to one test, and frequencies of the dual-tone signal input each time are different. For example, radio frequencies of the $K^{th}$ input dual-tone signal are f1(k) and f2(k), and during each test, f1(k) and f2(k) remain unchanged. The value of k is 1 to K, k is an integer, and K tests with different frequencies are referred to a frequency scanning measurement process.

S8: Perform PIM interpretation according the obtained PIM distribution, to obtain a PIM position detection result.

In the embodiment of the present invention, the PIM distribution is specifically PIM magnitudes at positions on the feeder 15 and with different distances to the position of the zero-distance calibration value. In the embodiment of the present invention, a PIM position detection result is obtained according to the PIM distribution, and then the PIM in the base station is eliminated according to the PIM position detection result, for example, replacing a cable connector of the feeder 15.

The passive inter-modulation position detection method provided in the embodiment of the present invention is described in detail above. For more detailed comprehension about the embodiment of the present invention, the following provides an application scenario of a passive inter-modulation position detection method provided in Embodiment 2 of the present invention.

An application scenario of the embodiment of the present invention is that: a transmitting band of a base station is 935-960 MHz, a receiving band of the base station is 890-915 MHz, a sampling point interval for transmitting digital baseband signals and that for receiving digital baseband signals are both Tsample. A data rate fsample=1/Tsample=184.32 MHz.

Parameters of frequency scanning measurement are specifically as follows:

$$N_{FFT}=384, \; T_{symbol}=N_{FFT} \times T_{sample}=384 \times T_{sample}, \; \text{and} \; f_{symbol}= f_{sample}/N_{FFT}=480kHz, \; \text{that is, a}$$

frequency scanning step is 0.48MHz.

It is assumed herein that if $N_{FFT}$ is an even number, frequency numbers of FFT range from $-N_{FFT}/2$ to $N_{FFT}/2-1$; or, if $N_{FFT}$ is an odd number, frequency numbers of FFT range from $-(N_{FFT}-1)/2$ to $(N_{FFT}-1)/2$. In this embodiment, $N_{FFT}=384$, and is an even number, and the frequency numbers of FFT range from -192 to 191.

When transmit frequency are scanned in a transmitting band, correspondingly, PIM falling within a receiving band is also scanned in a receiver band. A frequency scanning span of the former is called transmitting frequency scanning bandwidth, and a frequency scanning span of the latter is called receiving frequency scanning bandwidth. The transmitting frequency scanning bandwidth is defined as frequency scanning step x K. The receiving frequency scanning bandwidth is defined as frequency scanning step x (M-1)/2 x K, where M is a PIM order used in PIM detection. Generally, the used PIM detection order is 3 or 5. The frequency scanning step is equal to $f_{symbol}$.

In the embodiment of the present invention, the receiving frequency scanning bandwidth determines a PIM measurement resolution range. Specifically, the PIM measurement resolution range=1.3 x v/(2 x receiving frequency scanning bandwidth)=1.3 x v/(frequency scanning step x (M-1) x K), where v is the velocity of an electromagnetic wave in a cable. It is assumed that v=0.85 x 3e8 m/s, frequency scanning step=0.48MHz, the technical solution 1 in the following is used, that is, third-order PIM is detected, M=3, and K=11. Then, the receiving frequency scanning bandwidth=0.48 x (3-1)/2 x 11=5.28MHz, and the PIM measurement resolution range=1.3 x 0.85 x 3e8/(2 x 5.28e6)=31.4 m. If a distance between two PIM points is smaller than 31.4 m, it is possible that the two PIM points cannot be distinguished from each other.

In the embodiment of the present invention, the maximum PIM measurement distance=1/(frequency scanning step x (M-1)/2) x v/2, where v is the velocity of an electromagnetic wave in a cable, and M is a PIM order. It is assumed that v=0.85 x 3e8 m/s, frequency scanning step=0.48MHz, the technical option 1 in the following is used, that is, third-order PIM is detected, M=3. Then, the maximum PIM measurement distance=1/(0.48e6 x (3-1)/2) x 0.85 x 3e8/2=265.6 m. If PIM points go beyond the maximum PIM measurement distance, distance ambiguity occurs, which leads to an error. For example, if an actual distance between PIM points is 300 m, a measurement result is reported as 34.4 m (300 - 265.6=34.4) by mistake.

It should be noted that, the embodiment of the present invention has a total of 4 (detecting third-order PIM, detecting fifth-order PIM) x (frequency scanning manner 1, frequency scanning manner 2) technical solutions.

A manner in which both tones change at the same time while a dual-tone interval remains unchanged, that is, frequencies of the dual-tone signal are increased or decreased progressively based on a frequency scanning step at the same time, is called a frequency scanning manner 1. A manner in which the frequency of one tone remains unchanged while the frequency of the other tone is increased or decreased progressively based on a frequency scanning step so that a dual-tone interval is increased or decreased progressively based on the frequency scanning step is called a frequency scanning manner 2.

A most suitable detection order and frequency scanning manner may be selected each time according to an actual situation. Frequency scanning processes and measurement processes of the 4 technical options are described in detail in the following, including a frequency changing process of frequency scanning dual tones, and a forming process of a PIM frequency domain vector.

**Technical option 1:** third-order PIM is detected, the frequency scanning manner 1 is used, and the number of points K in frequency scanning is 11.

A specific frequency changing process of frequency scanning dual tones may be as follows:

During the first dual-tone test, a radio frequency signal frequency of the first tone is f1(1)=935.04MHz, a radio frequency signal frequency of the second tone is f2(1)=955.20MHz, and a frequency scanning dual-tone interval is f_double_tone(1)=20.16MHz.

During the $k^{th}$ dual-tone test, when k=2 to 11, the radio frequency signal frequency of the first tone is f1(k)=f1(1)=935.04MHz, the radio frequency signal frequency of the second tone is f2(k)=f2(1)+(k-1) x 0.48MHz=955.20MHz+(k-1) x 0.48 MHz, and the frequency scanning dual-tone interval is f_double_tone(k)=f_double_tone(1)+(k-1) x 0.48MHz=20.16MHz+(k-1) x 0.48MHz.

A PIM frequency scanning bandwidth is 11 points x 0.48MHz/point=5.28MHz.

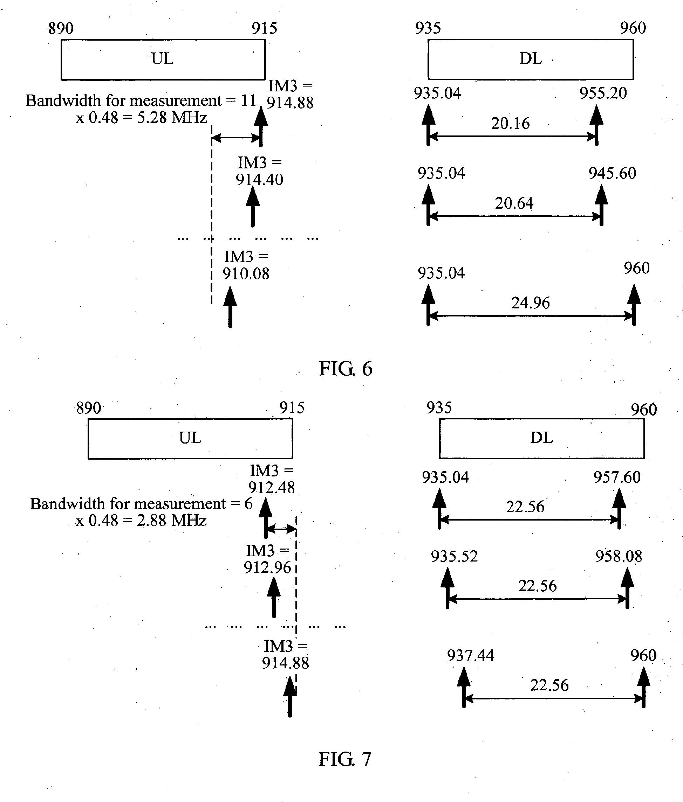

A frequency scanning process corresponding to technical option 1 in the embodiment of the present invention is shown in FIG. 6.

When k=1, a third-order PIM frequency falling within a receiver band is 935.04-20.16=914.88MHz. It is assumed that a radio frequency corresponding to the receiver baseband zero frequency is 902.4MHz; then, a baseband frequency corresponding to this PIM is 914.88-902.4=12.48MHz, and a corresponding FFT frequency number is 12.48MHz/0.48MHz=26. A PIM signal falling within the receiver band becomes a digital baseband signal after being processed by a receive channel; after FFT, the spectral line with the FFT frequency number being 26 should be extracted from an FFT output vector to serve as a No. 26 spectral line of a PIM frequency domain vector; at this time, values of all other spectral lines of the PIM frequency domain vector are 0.

When k=2, a third-order PIM frequency falling within the receiver band is 935.04+0.48-20.16=915.36MHz, a corresponding baseband frequency is 915.36-902.4=12.96MHz, and a corresponding FFT frequency number is 12.96MHz/0.48MHz=27. After FFT, a No. 27 spectral line should be extracted from an FFT output vector to serve as a No. 27 spectral line of a PIM frequency domain vector. At this time, values of all spectral lines of the PIM frequency domain vector other than the spectral lines No. 26 and No. 27 are 0.

Based on the foregoing processing manner, k is increased progressively until k=11, and a PIM frequency domain vector is formed based on the foregoing method.

**Technical option 2:** third-order PIM is detected, the frequency scanning manner 2 is used, and the number of points K in frequency scanning is 6.

A frequency changing process of frequency scanning dual tones is as follows:

During the first dual-tone test, a radio frequency signal frequency of the first tone is f1(1)=935.04MHz, a radio frequency signal frequency of the second tone is f2(1)=957.60MHz, and a frequency scanning dual-tone interval is f_double_tone(1)=22.56MHz.

During the $k^{th}$ dual-tone test, when k=2 to 6, the radio frequency signal frequency of the first tone is f1(k)=f1(1)+(k-1) x 0.48MHz=935.04MHz+(k-1) x 0.48MHz, the radio frequency signal frequency of the second tone is f2(k) = f2(1)+ (k-1) x 0.48MHz =957.60MHz +(k-1) x 0.48 MHz, and the frequency scanning dual-tone interval is f_double_tone(k)=f_double_tone(1)=22.56MHz.

APIM frequency scanning bandwidth is 6 points x 0.48MHz/point=2.88MHz.

A frequency scanning process corresponding to technical option 2 in the embodiment of the present invention is shown in FIG. 7.

When k=1, a third-order PIM frequency falling within a receiver band is 935.04-22.56=912.48MHz. It is assumed that a radio frequency corresponding to the receiver baseband zero frequency is 902.4MHz; then, a baseband frequency corresponding to this PIM is 912.48-902.4=10.08MHz, and a corresponding FFT frequency number is 10.08MHz/0.48MHz=21. A PIM signal falling within the receiver band becomes a digital baseband signal after being processed by a receive channel; after FFT, the spectral line with the FFT frequency number being 21 should be extracted from an FFT output vector to serve as a No. 21 spectral line of a PIM frequency domain vector; at this time, values of all other spectral lines of the PIM frequency domain vector are 0.

When k=2, a third-order PIM frequency falling within the receiver band is 935.04+0.48-22.56=912.96MHz, a corresponding baseband frequency is 912.96-902.4=10.56MHz, and a corresponding FFT frequency number is 10.56MHz/0.48MHz=22. After FFT, a No. 22 spectral line should be extracted from an FFT output vector to serve as a No. 22 spectral line of a PIM frequency domain vector. At this time, values of all spectral lines of the PIM frequency domain vector other than the spectral lines No. 21 and No. 22 are 0.

Based on the foregoing processing manner, k is increased progressively until k=6, and a PIM frequency domain vector is formed based on the foregoing method.

**Technical option 3:** fifth-order PIM is detected, the frequency scanning manner 1 is used, and the number of points K in frequency scanning =26.

A frequency changing process of frequency scanning dual tones is as follows:

During the first dual-tone test, a radio frequency signal frequency of the first tone is f1(1)=935.04MHz, a radio frequency signal frequency of the second tone is f2(1)=945.12MHz, and a frequency scanning dual-tone interval is f_double_tone(1)=10.08MHz.

During the $k^{th}$ dual-tone test, when k=2 to 26, the radio frequency signal frequency of the first tone is f1(k)=f1(1)=935.04MHz, the radio frequency signal frequency of the second tone is f2(k)=f2(1)+(k-1) x 0.48MHz=945.12MHz+(k-1) x 0.48 MHz, and the frequency scanning dual-tone interval is f_double_tone(k)=f_double_tone(1)+(k-1) x 0.48MHz=10.08MHz+(k-1) x 0.48MHz.

A PIM frequency scanning bandwidth is 26 points x 0.96MHz/point=24.96MHz.

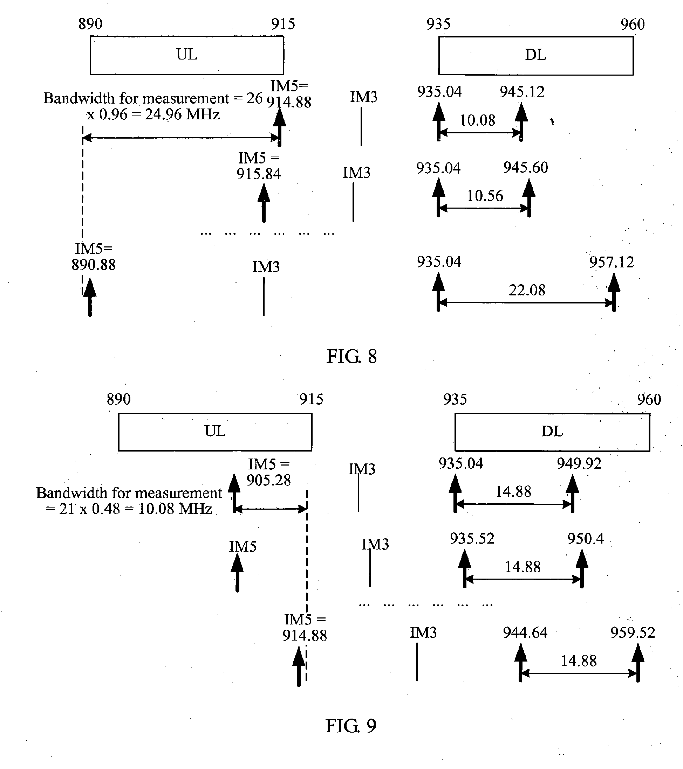

A frequency scanning process corresponding to technical option 3 in the embodiment of the present invention is shown in FIG. 8.

When k=1, a fifth-order PIM frequency falling within a receiver band is 935.04-2 x 10.08=914.88MHz. It is assumed that a radio frequency corresponding to the receiver baseband zero frequency is 902.4MHz; then, a baseband frequency corresponding to this PIM is 914.88-902.4=12.48MHz, and a corresponding FFT frequency number is 12.48MHz/0.48MHz=26. A PIM signal falling within the receiver band becomes a digital baseband signal after being processed by a receive channel; after FFT, the spectral line with the FFT frequency number being 26 should be extracted from an FFT output vector to serve as a No. 26 spectral line of a PIM frequency domain vector; at this time, values of all other spectral lines of the PIM frequency domain vector are 0.

When k=2, a fifth-order PIM frequency falling within the receiver band is 935.04+0.48-2 x 10.08=915.36MHz, a corresponding baseband frequency is 915.36-902.4=12.96MHz, and a corresponding FFT frequency number is 12.96MHz/0.48MHz=27. After FFT, a No. 27 spectral line should be extracted from an FFT output vector to serve as a No. 27 spectral line of a PIM frequency domain vector. At this time, values of all spectral lines of the PIM frequency domain vector other than the spectral lines No. 26 and No. 27 are 0.

Based on the foregoing processing manner, k is increased progressively until k=26, and a PIM frequency domain vector is formed based on the foregoing method.

**Technical option 4:** fifth-order PIM is detected, the frequency scanning manner 2 is used, and the number of points K in frequency scanning is 21.

A frequency changing process of frequency scanning dual tones is as follows:

During the first dual-tone test, a radio frequency signal frequency of the first tone is f1(1)=935.04MHz, a radio frequency signal frequency of the second tone is f2(1)=949.92MHz, and a frequency scanning dual-tone interval is f_double_tone(1)=14.88MHz.

During the $k^{th}$ dual-tone test, when k=2 to 21, the radio frequency signal frequency of the first tone is f1(k)=f1(1)+(k-1) x 0.48MHz=935.04MHz+(k-1) x 0.48MHz, the radio frequency signal frequency of the second tone is f2(k) = f2(1)+ (k-1) x 0.48MHz =949.92MHz +(k-1) x 0.48 MHz, and the frequency scanning dual-tone interval is f_double_tone(k)= f_double_tone(1)=14.88MHz.

A PIM frequency scanning bandwidth is 21 points x 0.96MHz/point=20.16MHz.

A frequency scanning process corresponding to technical option 4 in the embodiment of the present invention is shown in FIG. 9.

When k=1, a fifth-order PIM frequency falling within a receiver band is 935.04-14.88=920.16MHz. It is assumed that a radio frequency corresponding to the receiver baseband zero frequency is 902.4MHz; then, a baseband frequency corresponding to this PIM is 920.16-902.4=17.76MHz, and a corresponding FFT frequency number is 17.76MHz/0.48MHz=37. A PIM signal falling within the receiver band becomes a digital baseband signal after being processed by a receive channel; after FFT, the spectral line with the FFT frequency number being 37 should be extracted from an FFT output vector to serve as a No. 37 spectral line of a PIM frequency domain vector; at this time, values of all other spectral lines of the PIM frequency domain vector are 0.

When k=2, a fifth-order PIM frequency falling within the receiver band is 935.04+0.48-14.88=920.64MHz, a corresponding baseband frequency is 920.64-902.4=18.24MHz, and a corresponding FFT frequency number is 18.24MHz/0.48MHz=38. After FFT, a No. 38 spectral line should be extracted from an FFT output vector to serve as a No. 38 spectral line of a PIM frequency domain vector. At this time, values of all spectral lines of the PIM frequency domain vector other than the spectral lines No. 37 and No. 38 are 0.

Based on the foregoing processing manner, k is increased progressively until k=21, and a PIM frequency domain vector is formed based on the foregoing method.

In the embodiment of the present invention, after the PIM frequency domain vector is obtained, PIM distribution is obtained according to a zero-distance calibration method, and finally PIM interpretation is performed to obtain a PIM detection result.

In the embodiment of the present invention, a zero-distance calibration value is a position of sampling point 200, and the PIM detection result obtained through interpretation is a position of sampling point 260; a PIM position is specifically a position with a distance of 41.5 m to the position of the zero-distance calibration value.

The data rate $f_{sample}$=184.32MHz, the velocity of electromagnetic wave v in the feeder is 0.85 x 3e8 m/s; then, a distance corresponding to a single sampling point is 1/184.32MHz x 0.85 x 3e8m/s/2=0.6917 m. A distance between the PIM position and the position of the zero-distance calibration value is 0.6917 x (260-200)=41.5 m.

In the embodiment of the present invention, to ensure that the phase change of the signal output by an accumulator during one frequency scanning measurement process only reflects information of the PIM position and no additional phase change is introduced, the following requirements need to be satisfied:

1) All clocks and local oscillators of a base station system are coherent.

If the clocks and local oscillators are generated by means of a phase locking loop (Phase Locking Loop, PLL), the clocks and local oscillators need to be phase-locked to the same reference source.

If the clocks and local oscillators are generated by means of direct digital synthesis (Direct Digital Synthesis, DDS), it should be ensured that there is no frequency error; or over an accumulated duration, a phase error resulting from a frequency error should be small enough so that it does not generate an obvious impact on the measurement. The phase error over the accumulated time duration=$2\pi$ x frequency error x accumulated time duration. A specific requirement on the phase error is related to the application and precision of the measurement, and in most cases, the phase error should be smaller than 5 degrees.

2) In one frequency scanning measurement process, a radio frequency local oscillator and a digital local oscillator on the digital transmit channel of a PIM measurement loop should not be reset.

3) In one frequency scanning measurement process, during measurement using dual-tone signals with different frequencies, a phase difference resulting from the radio frequency local oscillator and the digital local oscillator should be prevented.

In the embodiment of the present invention, this requirement may be met using various methods. For example, mixing of receive frequency on an analog receive channel and mixing of transmit frequency on an analog transmit channel may use the same frequency mixing manner, the same radio frequency local oscillator, and the same digital local oscillator. The same local oscillator herein refers to that one local oscillator may be divided into two paths, which are used for the mixing of transmit frequency and the mixing of receive frequency in the same PIM measurement loop respectively. As the transmit phase and the receive phase are offset by each other, the phase difference caused by unreasonable local oscillator frequency configurations is eliminated. For another example, the frequency of the radio frequency local oscillator is set to an integer multiple of $f_{symbol}$, and therefore, one signal period $T_{symbol}$ just contains an integer number of radio frequency local oscillator periods; with reference to the following point 4, carrier phases of radio frequency signals at the transmitting start moment of all frequencies are the same. In this way, the radio frequency local oscillator does not generate different phases during measurement with different frequencies.
4) In one frequency scanning measurement process, the initial phase of dual-tone signals with different frequencies is a constant.

During measurement using dual-tone signals with different frequencies in one frequency scanning measurement process, an initial phase at which dual-tone signals are transmitted is kept unchanged. The signal initial phase refers to a signal phase at a start point of a transmit symbol. For example, a transmit symbol formed by $k^{th}$ baseband dual tones may be:

$$A \exp\left[j2\pi\left(f_{1BB} + (k-1)f_{symbol}\right)nT_{sample} + \theta_1\right] + A \exp\left[j2\pi\left(f_{2BB} + (k-1)f_{symbol}\right)nT_{sample} + \theta_2\right],$$

where $A$ is an amplitude of a dual-tone signal; $f_{1BB}$ and $f_{2BB}$ are baseband signal frequencies corresponding to dual-tone signal radio frequencies $f_1$ and $f_2$; $k$ represents a $k^{th}$ dual-tone signal, Symbol is a transmit symbol rate, $f_{symbol}$ = $1/T_{symbol}$, and $T_{symbol}$ is a time width of a dual-tone symbol; $\theta_1$ and $\theta_2$ are initial phases of the dual-tone signal; N is a time number of a sampling point, and ranges from 0 to $N_{FFT}-1$; and to keep the initial phase unchanged is to make $\theta_1$ and $\theta_2$ irrelevant to $k$, and be a constant.
5) In one frequency scanning measurement process, a time difference between moments when dual-tone signals with different frequencies are input to the transmit channel is an integer multiple of the signal period $T_{symbol}$.
6) In one frequency scanning measurement process, a time difference between a start moment when the dual-tone signal is input to the transmit channel and an accumulation start moment should be an integer multiple of the signal period $T_{symbol}$.

The passive inter-modulation position detection method provided in the embodiment of the present invention has been described in detail, and an embodiment of the present invention further provides an apparatus corresponding to the foregoing passive inter-modulation position detection method.

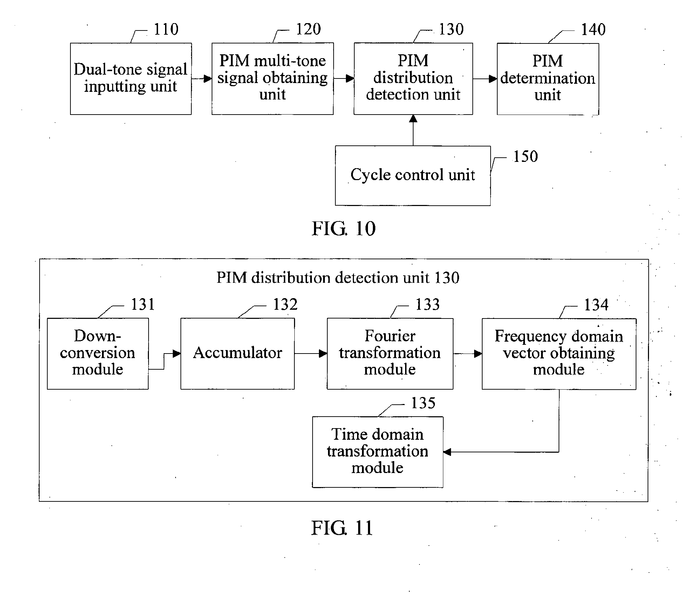

Referring to FIG. 10, FIG. 10 is a schematic structural diagram of a passive inter-modulation position detection apparatus provided in Embodiment 3 of the present invention.

The passive inter-modulation position detection apparatus provided in Embodiment 3 of the present invention includes:

a dual-tone signal inputting unit 110, configured to input a dual-tone signal to a transmit channel of a base station;
a PIM multi-tone signal obtaining unit 120, configured to obtain a passive inter-modulation PIM multi-tone signal output by an analog-to-digital converter on a receive channel of the base station;
a PIM distribution detection unit 130, configured to obtain PIM distribution of the base station according to the PIM multi-tone signal;
a cycle control unit 150, configured to trigger the dual-tone signal inputting unit 110 to input a dual-tone signal to the transmit channel of the base station after the PIM distribution detection unit 130 obtains the PIM distribution of the base station, where two successive dual-tone signals are input at an interval that is an integer multiple of a preset time $T_{symbol}$, a frequency of the dual-tone signal input each time is increased or decreased progressively based on a preset step frequency, the cycle control unit 150 controls the dual-tone signal inputting unit 110 to input dual-tone signals for K times in total, and K is an integer greater than 1; and
a PIM determination unit 140, configured to perform PIM interpretation according to the obtained PIM distribution, to obtain a PIM position detection result.

The passive inter-modulation position detection apparatus provided in Embodiment 3 of the present invention may be used in Embodiments 1 and 2 of the passive inter-modulation position detection method. For details, refer to related description in Embodiments 1 and 2. The passive inter-modulation position detection apparatus provided in the embodiment of the present invention may be located in a carrier unit of the base station.

Referring to FIG. 11, FIG. 11 is a schematic structural diagram of a PIM distribution detection unit in the passive inter-modulation position detection apparatus provided in Embodiment 3 of the present invention.

In the passive inter-modulation position detection apparatus provided in Embodiment 3 of the present invention, the PIM distribution detection unit 130 includes:

a down-conversion module 131, configured to perform digital down-conversion processing on the PIM multi-tone signal output by the analog-to-digital converter on the receive channel of the base station, to obtain a down-converted PIM multi-tone signal;

an accumulator 132, configured to perform accumulation processing on the down-converted PIM multi-tone signal, to obtain an accumulated PIM multi-tone signal;

a Fourier transformation module 133, configured to perform fast Fourier transformation on the accumulated PIM multi-tone signal, to obtain frequency spectral lines;

a frequency domain vector obtaining module 134, configured to extract a spectral line corresponding to a preset detection order from the frequency spectral lines, to form a PIM frequency domain vector; and

a time domain transformation module 135, configured to perform time domain transformation on the PIM frequency domain vector, to obtain PIM distribution of the base station.

The down-conversion module in the passive inter-modulation position detection apparatus provided in the embodiment of the present invention further includes:

a carrier frequency shift sub-module, configured to frequency-shift the PIM multi-tone signal output by the analog-to-digital converter on the receive channel of the base station near zero frequency, where a specific frequency spaced an integer multiple of $f_{symbol}$ from a radio frequency carrier of the signal input to a receiver of the base station is shifted to zero frequency, so that the PIM multi-tone signal falls within a digital low-pass filter band; and

a low-pass filtering sub-module, configured to perform low-pass filtering on the frequency-shifted PIM multi-tone signal, to obtain a down-converted PIM multi-tone signal.

It should be noted that, the content such as information interaction and execution process among the units in the passive inter-modulation position detection apparatus are based on the same thinking as the method embodiments of the present invention; therefore, for specific content, reference may be made to the description in the method embodiments of the present invention, which are not described herein again.

A person of ordinary skill in the art may understand that all or a part of the processes of the methods in the embodiments may be implemented by a computer program instructing relevant hardware. The program may be stored in a computer readable storage medium. When the program runs, the processes of the methods in the embodiments are performed. The storage medium may be a magnetic disk, an optical disc, a read-only memory (Read-Only Memory, ROM), or a random access memory (Random Access Memory, RAM).

## Claims

1.  A passive inter-modulation position detection method, **characterized by** comprising:

    A1: inputting (A1, S1) a dual-tone signal to a transmit channel of a base station;

    A2: obtaining (A2, S2) a passive inter-modulation, PIM, multi-tone signal output by an analog-to-digital converter on a receive channel of the base station;

    A3: obtaining PIM distribution of the base station according to the PIM multi-tone signal;

    cyclically performing the steps A1, A2, and A3 for K times, wherein two successive dual-tone signals are input at an interval that is an integer multiple of a preset time $T_{symbol}$, a frequency of the dual-tone signal input each time is increased or decreased progressively based on a preset step frequency $f_{symbol}$, K is an integer greater than 1, $f_{symbol}=1/T_{ymbol}$, and a dual-tone interval frequency of the dual-tone signal is an integer multiple of $f_{symbol}$; and

    A4: performing (A4, S8)PIM interpretation according to PIM distribution obtained in K times, to obtain a PIM position detection result.

2.  The method according to claim 1, wherein the obtaining PIM distribution of the base station according to the PIM multi-tone signal comprises:

    performing (B1, S3) digital down-conversion processing on the PIM multi-tone signal output by the analog-to-digital converter on the receive channel of the base station, to obtain a down-converted PIM multi-tone signal;

    performing (B2, S4) accumulation processing on the down-converted PIM multi-tone signal, to obtain an accumulated PIM multi-tone signal;

    performing (B3, S5) fast Fourier transformation on the accumulated PIM multi-tone signal, to obtain frequency spectral lines;

    extracting (B4, S6) a spectral line corresponding to a preset detection order from the frequency spectral lines, to form a PIM frequency domain vector; and

    performing (B5, S7) time domain transformation on the PIM frequency domain vector, to obtain the PIM distribution of the base station.

3. The method according to claim 2, wherein,
the number of points in the fast Fourier transformation is $N_{FFT}$, so $T_{symbol}$ is equal to $N_{FFT}$ x $T_{sample}$, and the $T_{sample}$ is a sampling point interval at which the base station receives digital baseband signals; and
during the accumulation of the down-converted PIM multi-tone signal, a time difference between a start moment of the accumulation and a moment when a corresponding dual-tone signal is input to the transmit channel is an integer multiple of $1/f_{symbol}$.

4. The method according to claim 2, wherein the performing digital down-conversion processing on the PIM multi-tone signal output by the analog-to-digital converter on the receive channel of the base station comprises:

frequency-shifting (C1) the PIM multi-tone signal output by the analog-to-digital converter on the receive channel of the base station near zero frequency, wherein a specific frequency spaced an integer multiple of $f_{symbol}$ from a radio frequency carrier is shifted to zero frequency, so that the PIM multi-tone signal falls within a digital low-pass filter band; and
performing (C2) low-pass filtering on the frequency-shifted PIM multi-tone signal, to obtain the down-converted PIM multi-tone signal.

5. The method according to claim 2, wherein the performing time domain transformation on the PIM frequency domain vector, to obtain PIM distribution of the base station comprises:

performing inverse fast Fourier transformation processing on the PIM frequency domain vector to obtain a PIM time domain vector; obtaining a zero-distance calibration value $D_{zero}$ of a feeder of the base station, and performing left cyclic shift on the PIM time domain vector for $D_{zero}$ time domain points to obtain the PIM distribution; or obtaining a zero-distance PIM frequency domain vector, dividing the PIM frequency domain vector formed by the frequency spectral lines by the zero-distance PIM frequency domain vector, and performing inverse fast Fourier transformation processing on a result of the division, to obtain the PIM distribution.

6. A passive inter-modulation position detection apparatus, **characterized by** comprising:

a dual-tone signal inputting unit (110), configured to input a dual-tone signal to a transmit channel of a base station;
a PIM multi-tone signal obtaining unit (120), configured to obtain a passive inter-modulation PIM multi-tone signal output by an analog-to-digital converter on a receive channel of the base station;
a PIM distribution detection unit (130), configured to obtain PIM distribution of the base station according to the PIM multi-tone signal;
a cycle control unit (150), configured to trigger the dual-tone signal inputting unit to input a dual-tone signal to the transmit channel of the base station after the PIM distribution detection unit obtains the PIM distribution of the base station, wherein two successive dual-tone signals are input at an interval that is an integer multiple of a preset time $T_{symbol}$, a frequency of the dual-tone signal input each time is increased or decreased progressively based on a preset step frequency, the cycle control unit controls the dual-tone signal inputting unit to input dual-tone signals for K times in total, and K is an integer greater than 1; and
a PIM determination unit (140), configured to perform PIM interpretation according to the obtained PIM distribution, to obtain a PIM position detection result.

7. The passive inter-modulation position detection apparatus according to claim 6, wherein the PIM determination unit comprises:

a down-conversion module (131), configured to perform digital down-conversion processing on the PIM multi-tone signal output by the analog-to-digital converter on the receive channel of the base station, to obtain a down-converted PIM multi-tone signal;
an accumulator (132), configured to perform accumulation processing on the down-converted PIM multi-tone signal, to obtain an accumulated PIM multi-tone signal;
a Fourier transformation module (133), configured to perform fast Fourier transformation on the accumulated PIM multi-tone signal, to obtain frequency spectral lines;
a frequency domain vector obtaining module (134), configured to extract a spectral line corresponding to a preset detection order from the frequency spectral lines, to form a PIM frequency domain vector; and
a time domain transformation module (135), configured to perform time domain transformation on the PIM frequency domain vector, to obtain PIM distribution of the base station.

8. The passive inter-modulation position detection apparatus according to claim 7, wherein the down-conversion module comprises:

a carrier frequency shift sub-module, configured to shift the PIM multi-tone signal output by the analog-to-digital converter on the receive channel of the base station near zero frequency, wherein a specific frequency spaced an integer multiple of $f_{symbol}$ from a radio frequency carrier is shifted to zero frequency, so that the PIM multi-tone signal falls within a digital low-pass filter band; and

a low-pass filtering sub-module, configured to perform low-pass filtering on the frequency-shifted PIM multi-tone signal, to obtain the down-converted PIM multi-tone signal.

9. The passive inter-modulation position detection apparatus according to claim 7, wherein the performing, by the time domain transformation module, time domain transformation on the PIM frequency domain vector, to obtain PIM distribution of the base station comprises:

performing, by the time domain transformation module, inverse fast Fourier transformation processing on the PIM frequency domain vector to obtain a PIM time domain vector; obtaining a zero-distance calibration value $D_{zero}$ of a feeder of the base station, and performing left cyclic shift on the PIM time domain vector for $D_{zero}$ time domain points to obtain the PIM distribution; or

obtaining, by the time domain transformation module, a zero-distance PIM frequency domain vector, dividing the PIM frequency domain vector formed by the frequency spectral lines by the zero-distance PIM frequency domain vector, and performing inverse fast Fourier transformation processing on a result of the division, to obtain the PIM distribution.

**Patentansprüche**

1. Passiv-Intermodulations-Positionsdetektionsverfahren, **dadurch gekennzeichnet, dass** es die folgenden Schritte umfasst:

A1: Eingeben (A1, S1) eines Zweitonsignals in einen Sendekanal einer Basisstation;

A2: Erhalten (A2, S2) eines Passiv-Intermodulations-Mehrtonsignals, PIM-Mehrtonsignal, das von einem Analog-Digital-Wandler auf einem Empfangskanal der Basisstation ausgegeben wird ;

A3: Erhalten einer PIM-Verteilung der Basisstation gemäß dem PIM-Mehrtonsignal; zyklisches Ausführen der Schritte A1, A2 und A3 K Mal, wobei zwei aufeinanderfolgende Zweitonsignale in einem Intervall eingegeben werden, das ein ganzzahliges Vielfaches einer vorgegebenen Zeit $T_{symbol}$ ist, wobei eine Frequenz der Zweitonsignaleingabe jedes Mal schrittweise basierend auf einer vorgegebenen Schrittfrequenz $f_{symbol}$ erhöht oder erniedrigt wird, wobei K eine ganze Zahl größer als 1 ist, $f_{symbol} = 1/T_{symbol}$ ist und eine Zweitonintervallfrequenz des Zweitonsignals ein ganzzahliges Vielfaches von $f_{symbol}$ ist; und

A4: Durchführen (A4, S8) einer PIM-Interpretation gemäß einer in K Malen erhaltenen PIM-Verteilung, um ein PIM-Positionsdetektionsergebnis zu erhalten.

2. Verfahren nach Anspruch 1, wobei das Erhalten der PIM-Verteilung der Basisstation gemäß dem PIM-Mehrtonsignal umfasst:

Durchführen (B1, S3) digitaler Abwärtswandlungsverarbeitung an dem PIM-Mehrtonsignal, das von dem Analog-Digital-Wandler auf dem Empfangskanal der Basisstation ausgegeben wird, um ein abwärtsgewandeltes PIM-Mehrtonsignal zu erhalten;

Durchführen (B2, S4) von Akkumulationsverarbeitung an dem abwärtsgewandelten PIM-Mehrtonsignal, um ein akkumuliertes PIM-Mehrtonsignal zu erhalten;

Durchführen (B3, S5) von schneller Fouriertransformation an dem akkumulierten PIM-Mehrtonsignal, um Frequenzspektrallinien zu erhalten;

Extrahieren (B4, S6) einer Spektrallinie entsprechend einer vorgegebenen Detektionsreihenfolge der Frequenzspektrallinien, um einen PIM-Frequenzbereichsvektor zu bilden; und

Durchführen (B5, S7) einer Zeitbereichstransformation an dem PIM-Frequenzbereichsvektor, um die PIM-Verteilung der Basisstation zu erhalten.

**3.** Verfahren nach Anspruch 2, wobei
$N_{FFT}$ die Anzahl der Punkte in der schnellen Fourier-Transformation ist, sodass $T_{symbol}$ gleich $N_{FFT}$ x $T_{sample}$ ist, und das $T_{sample}$ ein Abtastpunktintervall ist, in dem die Basisstation digitale Basisbandsignale empfängt; und während der Akkumulation des abwärtsgewandelten PIM-Mehrtonsignals eine Zeitdifferenz zwischen einem Startzeitpunkt der Akkumulation und einem Zeitpunkt, an dem ein entsprechendes Zweitonsignal in den Sendekanal eingegeben wird, ein ganzzahliges Vielfaches von 1/ $f_{symbol}$ ist.

**4.** Verfahren nach Anspruch 2, wobei das Durchführen digitalen Abwärtswandlungsverarbeitens an dem PIM-Mehrtonsignal, das von dem Analog-Digital-Wandler auf dem Empfangskanal der Basisstation ausgegeben wird, umfasst:

Frequenzverschieben (C1) des PIM-Mehrtonsignals, das von dem Analog-Digital-Wandler auf dem Empfangskanal der Basisstation ausgegeben wird, nahe der Frequenz null, wobei eine bestimmte Frequenz, die ein ganzzahliges Vielfaches von $f_{symbol}$ von einem Hochfrequenzträger entfernt ist, zur Frequenz null verschoben wird, so dass das PIM-Mehrtonsignal in ein Digital-Tiefpassfilterband fällt; und
Durchführen (C2) von Tiefpassfilterung an dem frequenzverschobenen PIM-Mehrtonsignal, um das abwärtsgewandelte PIM-Mehrtonsignal zu erhalten.

**5.** Verfahren nach Anspruch 2, wobei das Durchführen einer Zeitbereichstransformation an dem PIM-Frequenzbereichsvektor, um eine PIM-Verteilung der Basisstation zu erhalten, umfasst:

Durchführen einer inversen schnellen Fouriertransformationsverarbeitung an dem PIM-Frequenzbereichsvektor, um einen PIM-Zeitbereichsvektor zu erhalten; Erhalten eines Null-Distanz-Kalibrierungswerts $D_{zero}$ einer Zuleitung der Basisstation, und Durchführen zyklischer Linksverschiebung an dem PIM-Zeitbereichsvektor für $D_{zero}$ Zeitbereichspunkte, um die PIM-Verteilung zu erhalten; oder
Erhalten eines Null-Distanz-PIM-Frequenzbereichsvektors, Dividieren des PIM-Frequenzbereichsvektors, der durch die Spektrallinien gebildet wird, durch den Null-Distanz-PIM-Frequenzbereichsvektor und Durchführen inversen schnellen Fouriertransformationsverarbeitens an einem Ergebnis der Division, um die PIM-Verteilung zu erhalten.

**6.** Passiv-Intermodulations-Positionsdetektionsvorrichtung, **dadurch gekennzeichnet, dass** sie das Folgende umfasst:

eine Zweitonsignal-Eingabeeinheit (110), die dafür ausgelegt ist, ein Zweitonsignal in einen Sendekanal einer Basisstation einzugeben;
eine PIM-Mehrtonsignal-Erhalteeinheit (120), die dafür ausgelegt ist, ein Passiv-Intermodulations-Mehrtonsignal, PIM-Mehrtonsignal" das von einem Analog-Digital-Wandler auf einem Empfangskanal der Basisstation ausgegeben wird, zu erhalten;
eine PIM-Verteilungs-Detektionseinheit (130), die dafür ausgelegt ist, eine PIM-Verteilung der Basisstation gemäß dem PIM-Mehrtonsignal zu erhalten;
eine Zyklus-Steuereinheit (150), die dafür ausgelegt ist, die Zweitonsignal-Eingabeeinheit zu triggern, ein Zweitonsignal in den Sendekanal der Basisstation einzugeben, nachdem die PIM-Verteilungs-Detektionseinheit die PIM-Verteilung der Basisstation erhält, wobei zwei aufeinanderfolgende Zweitonsignale in einem Intervall eingegeben werden, das ein ganzzahliges Vielfaches einer vorgegebenen Zeit $T_{symbol}$ ist, wobei eine Frequenz der Zweitonsignaleingabe jedes Mal schrittweise basierend auf einer vorgegebenen Schrittfrequenz erhöht oder erniedrigt wird, die Zyklus-Steuereinheit die Zweitonsignal-Eingabeeinheit steuert, um insgesamt K Mal Zweitonsignale einzugeben, und wobei K eine ganze Zahl größer als 1 ist, und
eine PIM-Bestimmungseinheit (140), die dafür ausgelegt ist, eine PIM-Interpretation gemäß der erhaltenen PIM-Verteilung durchzuführen, um ein PIM-Positionsdetektionsergebnis zu erhalten.

**7.** Passiv-Intermodulations-Positionsdetektionsvorrichtung nach Anspruch 6, wobei die PIM-Bestimmungseinheit umfasst:

ein Abwärtswandlungsmodul (131), das dafür ausgelegt ist, digitale Abwärtswandlungsverarbeitung an dem PIM-Mehrtonsignal, das von dem Analog-Digital-Wandler auf dem Empfangskanal der Basisstation ausgegeben wird, durchzuführen, um ein abwärtsgewandeltes PIM-Mehrtonsignal zu erhalten;
einen Akkumulator (132), der dafür ausgelegt ist, Akkumulationsverarbeitung an dem abwärtsgewandelten PIM-Mehrtonsignal durchzuführen, um ein akkumuliertes PIM-Mehrtonsignal zu erhalten;
ein Fourier-Transformationsmodul (133), das dafür ausgelegt ist, eine schnelle Fouriertransformation an dem akkumulierten PIM-Mehrtonsignal durchzuführen, um Frequenzspektrallinien zu erhalten;

ein Frequenzbereichsvektor-Erhaltemodul (134), das dafür ausgelegt ist, eine Spektrallinie entsprechend einer vorgegebenen Detektionsreihenfolge der Frequenzspektrallinien zu extrahieren, um einen PIM-Frequenzbereichsvektor zu bilden; und

ein Zeitbereichstransformationsmodul (135), das dafür ausgelegt ist, eine Zeitbereichstransformation an dem PIM-Frequenzbereichsvektor durchzuführen, um eine PIM-Verteilung der Basisstation zu erhalten.

8.  Passiv-Intermodulations-Positionsdetektionsvorrichtung nach Anspruch 7, wobei das Abwärtswandlungsmodul umfasst:

ein Trägerfrequenzverschiebungs-Submodul, das dafür ausgelegt ist, das PIM-Mehrtonsignal, das von dem Analog-Digital-Wandler auf dem Empfangskanal der Basisstation ausgegeben wird, nahe der Frequenz null zu verschieben, wobei eine bestimmte Frequenz, die ein ganzzahliges Vielfaches von $f_{symbol}$ von einem Hochfrequenzträger entfernt ist, zur Frequenz null verschoben wird, so dass das PIM-Mehrtonsignal in ein Digital-Tiefpassfilterband fällt; und

ein Tiefpassfilter-Submodul, das dafür ausgelegt ist, Tiefpassfilterung an dem frequenzverschobenen PIM-Mehrtonsignal durchzuführen, um das abwärtsgewandelte PIM-Mehrtonsignal zu erhalten.

9.  Passiv-Intermodulations-Positionsdetektionsvorrichtung nach Anspruch 7, wobei das Durchführen einer Zeitbereichstransformation an dem PIM-Frequenzbereichsvektor durch das Zeitbereichstransformationsmodul, um eine PIM-Verteilung der Basisstation zu erhalten, umfasst:

Durchführen einer inversen schnellen Fouriertransformationsverarbeitung an dem PIM-Frequenzbereichsvektor durch das Zeitbereichstransformationsmodul, um einen PIM-Zeitbereichsvektor zu erhalten; Erhalten eines Null-Distanz-Kalibrierungswerts $D_{zero}$ einer Zuleitung der Basisstation, und Durchführen zyklischer Linksverschiebung an dem PIM-Zeitbereichsvektor für $D_{zero}$ Zeitbereichspunkte, um die PIM-Verteilung zu erhalten; oder Erhalten eines Null-Distanz-PIM-Frequenzbereichsvektors durch das Zeitbereichstransformationsmodul, Dividieren des PIM-Frequenzbereichsvektors, der durch die Spektrallinien gebildet wird, durch den Null-Distanz-PIM-Frequenzbereichsvektor und Durchführen inversen schnellen Fouriertransformationsverarbeitens an einem Ergebnis der Division, um die PIM-Verteilung zu erhalten.

## Revendications

1.  Procédé de détection de position d'intermodulation passive, **caractérisé en ce qu'**il comprend :

A1: l'entrée (A1, S1), d'un signal à deux tonalités dans un canal de transmission d'une station de base ;
A2 : l'obtention (A2, S2) d'un signal d'intermodulation passive, PIM, à multiples tonalités produit en sortie par un convertisseur analogique/numérique sur un canal de réception de la station de base ;
A3 : l'obtention de la distribution PIM de la station de base en fonction du signal PIM à multiples tonalités ;
l'exécution cyclique des étapes A1, A2, et A3 K fois, dans lequel deux signaux à deux tonalités successifs sont entrés à un intervalle qui est un multiple entier d'un temps préétabli $T_{symbol}$, une fréquence du signal à deux tonalités entré chaque fois est augmentée ou diminuée progressivement en fonction d'une fréquence de pas préétablie $f_{symbol}$, K est un entier supérieur à 1, $f_{symbol} = 1/T_{symbol}$ et une fréquence d'intervalle de deux tonalités du signal à deux tonalités est un multiple entier de $f_{symbol}$ ; et
A4 : l'exécution (A4, S8) d'une interprétation PIM en fonction de la distribution PIM obtenue K fois, pour obtenir un résultat de détection de position PIM.

2.  Procédé selon la revendication 1, dans lequel l'obtention de la distribution PIM de la station de base en fonction du signal PIM à multiples tonalités comprend :

l'exécution (B1, S3) d'un traitement de conversion abaisseuse numérique sur le signal PIM à multiples tonalités produit en sortie par le convertisseur analogique/numérique sur le canal de réception de la station de base, pour obtenir un signal PIM à multiples tonalités abaissé en fréquence ;
l'exécution (B2, S4) d'un traitement de cumul sur le signal PIM à multiples tonalités abaissé en fréquence pour obtenir un signal PIM à multiples tonalités cumulé ;
l'exécution (B3, S5) d'une transformation de Fourier rapide sur le signal PIM à multiples tonalités cumulé, pour obtenir des raies spectrales de fréquence ;

l'extraction (B4, S6) des raies spectrales de fréquence d'une raie spectrale correspondant à un ordre de détection préétabli, pour former un vecteur de domaine de fréquence PIM ; et

l'exécution (B5, S7) d'une transformation de domaine temporel sur le vecteur de domaine de fréquence PIM, pour obtenir la distribution PIM de la station de base.

3.  Procédé selon la revendication 2, dans lequel :

le nombre de points dans la transformation de Fourier rapide est $N_{FFT}$, si bien que $T_{symbol}$ est égal à $N_{FFT}$ x $T_{sample}$, et $T_{sample}$ est un intervalle de points d'échantillonnage auquel la station de base reçoit les signaux en bande de base numériques ; et

durant le cumul du signal PIM à multiples tonalités abaissé en fréquence, une différence de temps entre un moment de départ du cumul et un moment d'entrée d'un signal à deux tonalités correspondant dans le canal de transmission est un multiple entier de $1/f_{symbol}$.

4.  Procédé selon la revendication 2, dans lequel l'exécution du traitement de conversion abaisseuse numérique sur le signal PIM à multiples tonalités produit en sortie par le convertisseur analogique/numérique sur le canal de réception de la station de base comprend :

le décalage en fréquence (C1) du signal PIM à multiples tonalités produit en sortie par le convertisseur analogique/numérique sur le canal de réception de la station de base près de la fréquence nulle, dans lequel une fréquence spécifique espacée par un multiple entier de $f_{symbol}$ d'une porteuse de fréquence radioélectrique est décalée à la fréquence nulle, de telle sorte que le signal PIM à multiples tonalités tombe dans une bande de filtre passe-bas numérique ; et

l'exécution (C2) d'un filtrage passe-bas sur le signal PIM à multiples tonalités décalé en fréquence pour obtenir le signal PIM à multiples tonalités abaissé en fréquence.

5.  Procédé selon la revendication 2, dans lequel l'exécution de la transformation de domaine temporel sur le vecteur de domaine de fréquence PIM, pour obtenir la distribution PIM de la station de base comprend :

l'exécution d'une transformation de Fourier rapide inverse sur le vecteur de domaine de fréquence PIM pour obtenir un vecteur de domaine temporel PIM ; l'obtention d'une valeur d'étalonnage de distance nulle $D_{zero}$ d'une ligne d'alimentation de la station de base, et l'exécution d'un décalage cyclique à gauche sur le vecteur de domaine temporel PIM pour des points de domaine temporel $D_{zero}$ pour obtenir la distribution PIM ; ou

l'obtention d'un vecteur de domaine de fréquence PIM de distance nulle, la division du vecteur de domaine de fréquence PIM formé par les raies spectrales de fréquence par le vecteur de domaine de fréquence PIM de distance nulle, et l'exécution d'un traitement de transformation de Fourier rapide inverse sur un résultat de la division, pour obtenir la distribution PIM.

6.  Appareil de détection de position d'intermodulation passive, **caractérisé en ce qu'**il comprend :

une unité d'entrée de signal à deux tonalités (110), configurée pour entrer un signal à deux tonalités dans un canal de transmission d'une station de base ;

une unité d'obtention d'un signal PIM à multiples tonalités (120), configurée pour obtenir un signal d'intermodulation passive PIM à multiples tonalités produit en sortie par un convertisseur analogique/numérique sur un canal de réception de la station de base ;

une unité de détection de distribution PIM (130), configurée pour obtenir la distribution PIM de la station de base en fonction du signal PIM à multiples tonalités ;

une unité de commande cyclique (150), configurée pour déclencher l'unité d'entrée de signal à deux tonalités pour entrer un signal à deux tonalités dans le canal de transmission de la station de base après que l'unité de détection de distribution PIM obtient la distribution PIM de la station de base, dans lequel deux signaux à deux tonalités successifs sont entrés à un intervalle qui est un multiple entier d'un temps préétabli $T_{symbol}$, une fréquence du signal à deux tonalités entré chaque fois est augmentée ou diminuée progressivement en fonction d'une fréquence de pas préétablie, l'unité de commande cyclique commande l'unité d'entrée de signal à deux tonalités pour entrer des signaux à deux tonalités K fois en tout, et K est un entier supérieur à 1 ; et

une unité de détermination PIM (140), configurée pour exécuter une interprétation PIM en fonction de la distribution PIM obtenue pour obtenir un résultat de détection de position PIM.

7.  Appareil de détection de position d'intermodulation passive selon la revendication 6, dans lequel l'unité de détermination PIM comprend :

un module de conversion abaisseuse (131), configuré pour exécuter un traitement de conversion abaisseuse numérique sur le signal PIM à multiples tonalités produit en sortie par le convertisseur analogique/numérique sur le canal de réception de la station de base, pour obtenir un signal PIM à multiples tonalités abaissé en fréquence ;

un cumulateur (132), configuré pour exécuter un traitement de cumul sur le signal PIM à multiples tonalités abaissé en fréquence pour obtenir un signal PIM à multiples tonalités cumulé ;

un module de transformation de Fourier (133), configuré pour exécuter une transformation de Fourier rapide sur le signal PIM à multiples tonalités cumulé, pour obtenir des raies spectrales de fréquence ;

un module d'obtention de vecteur de domaine de fréquence (134), configuré pour extraire des raies spectrales de fréquence une raie spectrale correspondant à un ordre de détection préétabli, pour former un vecteur de domaine de fréquence PIM ; et

un module de transformation de domaine temporel (135), configuré pour exécuter une transformation de domaine temporel sur le vecteur de domaine de fréquence PIM, pour obtenir la distribution PIM de la station de base.

8. Appareil de détection de position d'intermodulation passive selon la revendication 7, dans lequel le module de conversion abaisseuse comprend :

un sous-module de décalage de fréquence porteuse, configuré pour décaler le signal PIM à multiples tonalités produit en sortie par le convertisseur analogique/numérique sur le canal de réception de la station de base près de la fréquence nulle, dans lequel une fréquence spécifique espacée par un multiple entier de $f_{symbol}$ d'une porteuse de fréquence radioélectrique est décalée à la fréquence nulle, de telle sorte que le signal PIM à multiples tonalités tombe dans une bande de filtre passe-bas numérique ; et

un sous-module de filtrage passe-bas, configuré pour exécuter un filtrage passe-bas sur le signal PIM à multiples tonalités décalé en fréquence pour obtenir le signal PIM à multiples tonalités abaissé en fréquence.

9. Appareil de détection de position d'intermodulation passive selon la revendication 7, dans lequel l'exécution, par le module de transformation de domaine temporel, de la transformation de domaine temporel sur le vecteur de domaine de fréquence PIM, pour obtenir la distribution PIM de la station de base comprend :

l'exécution, par le module de transformation de domaine temporel, d'un traitement de transformation de Fourier rapide inverse sur le vecteur de domaine de fréquence PIM pour obtenir un vecteur de domaine temporel PIM ;

l'obtention d'une valeur d'étalonnage de distance nulle $D_{zero}$ d'une ligne d'alimentation de la station de base, et l'exécution d'un décalage cyclique à gauche sur le vecteur de domaine temporel PIM pour des points de domaine temporel $D_{zero}$ pour obtenir la distribution PIM ; ou

l'obtention, par le module de transformation de domaine temporel, d'un vecteur de domaine de fréquence PIM de distance nulle, la division du vecteur de domaine de fréquence PIM formé par les raies spectrales de fréquence par le vecteur de domaine de fréquence PIM de distance nulle, et l'exécution d'un traitement de transformation de Fourier rapide inverse sur un résultat de la division, pour obtenir la distribution PIM.

Cyclically perform K times in total

| | |
|---|---|
| Input a dual-tone signal to a transmit channel of a base station | A1 |

↓

| | |
|---|---|
| Obtain a passive inter-modulation PIM multi-tone signal output by an analog-to-digital converter on a receive channel of the base station | A2 |

↓

| | |
|---|---|
| Obtain PIM distribution of the base station according to the PIM multi-tone signal | A3 |

↓

| | |
|---|---|
| Perform PIM interpretation according to PIM distribution obtained in K times, to obtain a PIM position detection result | A4 |

FIG. 1

| | |
|---|---|
| Perform digital down-conversion processing on the PIM multi-tone signal output by the analog-to-digital converter on the receive channel of the base station, to obtain a down-converted PIM multi-tone signal | B1 |

↓

| | |
|---|---|
| Perform accumulation processing on the down-converted PIM multi-tone signal, to obtain an accumulated PIM multi-tone signal | B2 |

↓

| | |
|---|---|
| Perform fast Fourier transformation on the accumulated PIM multi-tone signal, to obtain frequency spectral lines | B3 |

↓

| | |
|---|---|
| Extract a spectral line corresponding to a preset detection order from the frequency spectral lines, to form a PIM frequency domain vector | B4 |

↓

| | |
|---|---|
| Perform time domain transformation on the PIM frequency domain vector, to obtain PIM distribution | B5 |

FIG. 2

20

Frequency-shift the PIM multi-tone signal output by the analog-to-digital converter on the receive channel of the base station near zero frequency, where a specific frequency spaced an integer multiple of $f_{symbol}$ from a radio frequency carrier is shifted to zero frequency, so that the PIM multi-tone signal falls within a digital low-pass filter band ⟋ C1

Perform low-pass filtering on the frequency-shifted PIM multi-tone signal, to obtain a down-converted PIM multi-tone signal ⟋ C2

FIG. 3

FIG. 4

```
                                                                      ┌── S1
┌──────────────────────────────────────────────────────────┐  /
│         Input a dual-tone signal to a transmit channel of a base station │/
└──────────────────────────────────────────────────────────┘
                              │
                              ▼                                       ┌── S2
┌──────────────────────────────────────────────────────────┐  /
│  Obtain a PIM multi-tone signal output by an analog-to-digital converter on a │/
│              receive channel of the base station           │
└──────────────────────────────────────────────────────────┘
                              │
                              ▼                                       ┌── S3
┌──────────────────────────────────────────────────────────┐  /
│  Perform digital down-conversion processing on the obtained PIM multi-tone │/
│                            signal                          │
└──────────────────────────────────────────────────────────┘
                              │
                              ▼                                       ┌── S4
┌──────────────────────────────────────────────────────────┐  /
│  Perform accumulation processing on the down-converted PIM multi-tone │/
│                            signal                          │
└──────────────────────────────────────────────────────────┘
                              │
                              ▼                                       ┌── S5
┌──────────────────────────────────────────────────────────┐  /
│  Perform fast Fourier transformation on the accumulated PIM multi-tone │/
│           signal, to obtain frequency spectral lines       │
└──────────────────────────────────────────────────────────┘
                              │
                              ▼                                       ┌── S6
┌──────────────────────────────────────────────────────────┐  /
│  Extract a spectral line corresponding to a preset detection order from the │/
│    frequency spectral lines, to form a PIM frequency domain vector │
└──────────────────────────────────────────────────────────┘
                              │
                              ▼                                       ┌── S7
┌──────────────────────────────────────────────────────────┐  /
│  Perform time domain transformation on the PIM frequency domain vector, │/
│              to obtain PIM distribution                    │
└──────────────────────────────────────────────────────────┘
                              │
                              ▼                                       ┌── S8
┌──────────────────────────────────────────────────────────┐  /
│  Perform PIM interpretation according the obtained PIM distribution, to │/
│         obtain a PIM position detection result            │
└──────────────────────────────────────────────────────────┘
```

FIG. 5

890                              915

┌─────────────────────────────┐
│              UL              │
└─────────────────────────────┘
                              IM3 =
Bandwidth for measurement = 11 ↙ 914.88
        x 0.48 = 5.28 MHz
                              ↑
                            IM3 =
                            914.40
                              ↑

...   ...  ...  ...  ...

                            IM3 =
                            910.08
                              ↑

935                              960

┌─────────────────────────────┐
│              DL              │
└─────────────────────────────┘
935.04                         955.20
  ↑←──────── 20.16 ────────→↑

935.04                         945.60
  ↑←──────── 20.64 ────────→↑

935.04                           960
  ↑←──────── 24.96 ────────→↑

FIG. 6

890                              915

┌─────────────────────────────┐
│              UL              │
└─────────────────────────────┘
                            IM3 =
                            912.48
Bandwidth for measurement = 6  ↑
      x 0.48 = 2.88 MHz
                            IM3 =
                            912.96
                              ↑

...   ...   ...   ...   ...   ...

                            IM3 =
                            914.88
                              ↑

935                              960

┌─────────────────────────────┐
│              DL              │
└─────────────────────────────┘
935.04                         957.60
  ↑←──────── 22.56 ────────→↑

935.52                         958.08
  ↑←──────── 22.56 ────────→↑

937.44                           960
  ↑←──────── 22.56 ────────→↑

FIG. 7

24

890                                    915          935                                    960

┌─────────────────────────┐            ┌─────────────────────────┐
│            UL            │            │            DL            │
└─────────────────────────┘            └─────────────────────────┘

                              IM5=
Bandwidth for measurement = 26 914.88    IM3    935.04        945.12
        x 0.96 = 24.96 MHz
                                                 ↑←── 10.08 ──→↑

                              IM5 =
                              915.84    IM3    935.04        945.60
                                ↑
                                                 ↑←── 10.56 ──→↑

              ...  ...  ...  ...  ...  ...

    IM5=
    890.88                     IM3            935.04              957.12
      ↑                         │
                                                 ↑←──── 22.08 ────→↑

FIG. 8

890                              915          935                                    960

    ┌─────────────────────┐                ┌─────────────────────────┐
    │          UL          │                │            DL            │
    └─────────────────────┘                └─────────────────────────┘

                        IM5 =          IM3    935.04        949.92
                        905.28
Bandwidth for measurement    ↑                   ↑←── 14.88 ──→↑
  = 21 x 0.48 = 10.08 MHz  ↑←──→↑

         IM5                            IM3    935.52        950.4
          ↑                                      ↑←── 14.88 ──→↑

                                   ...  ...  ...  ...  ...  ...

                        IM5 =          IM3    944.64        959.52
                        914.88
                          ↑                       ↑←── 14.88 ──→↑

FIG. 9

FIG. 10

FIG. 11

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2010085061 A